# FASCICULE DE BREVET EUROPEEN

(11) **EP 4 303 079 B1**
(45) Date de publication et mention de la délivrance du brevet: **07.05.2025**
(21) Numéro de dépôt: 23181238.9
(22) Date de dépôt: 23.06.2023
(51) Int. Cl.: B60R 9/058, B60R 9/045

(54) **DISPOSITIF DE BARRE DE TOIT D'UN VÉHICULE**
DACHSTANGENVORRICHTUNG FÜR EIN FAHRZEUG
ROOF BAR DEVICE OF VEHICLE

(30) Priorité: 04.07.2022 FR 2206742
(43) Date de publication de la demande: 10.01.2024
(73) Titulaire: Renault s.a.s, 92100 Boulogne Billancourt (FR)
(72) Inventeur: ILIE, Ionut-Octav, 062203 BUCAREST (RO)

(56) Documents cités:
- US-A1- 2008 252 100
- US-B2- 10 556 534
- US-B2- 7 458 490

## Description

L'invention concerne dans le domaine des véhicules automobiles, les systèmes de porte-bagages de toit convertibles.

Les systèmes actuels des porte-bagages demandent d'utiliser des outils pour repositionner les barres de toit par exemple d'une position longitudinale vers une position latérale ou inversement. Ce qui implique un processus long et souvent compliqué.

La demande de brevet US2008252100-A1, décrit une galerie de toit d'un véhicule comprenant des barres latérales et des barres transversales mobiles, et des mécanismes de verrouillage en extrémité des barres coopérant entre une extrémité de barre latérale et une extrémité de barre transversale. Les barres transversales sont mobiles pour occuper une position basse lorsqu'elles sont superposées aux barres latérales, et une position surélevée lorsqu'elles sont perpendiculaires aux barres latérales. La variation de position en hauteur est obtenue à l'aide de nervures en face inférieure de chaque barre transversale qui coopèrent avec des fentes en face supérieure de chaque barre latérale. Lorsqu'une barre transversale est superposée à une barre latérale, les nervures s'insèrent dans les fentes correspondantes de la barre latérale. Lorsque les barres transversales sont perpendiculaires aux barres latérales, les nervures sous une barre transversale ne sont plus alignées avec les fentes des barres latérales de sorte que les nervures reposent sur une surface supérieure des barres latérales créant un espace entre la barre transversale et le toit du véhicule.

L'invention vise à proposer un dispositif de barres de toit différent de ceux déjà connus, permettant facilement de disposer une barre de toit en position transversale ou longitudinale sur le toit d'un véhicule.

A cet effet, l'invention fournit un dispositif de barre de toit qui comprend une barre de toit démontable et un moyen de fixation verrouillable/déverrouillable de la barre en chaque extrémité de la barre, ledit moyen de fixation comprenant :
- un support de fixation comportant une platine munie de plots de verrouillage,
- une plaque de verrouillage montée en correspondance avec ladite platine, divisée en autant de secteurs de verrouillage que de plots, chaque secteur étant récepteur d'un plot apte à y occuper une position de verrouillage et une position de déverrouillage,
- une poignée de manœuvre,
- un pivot d'axe de rotation orienté dans un plan perpendiculaire au plan principal de ladite plaque, solidarisé à la poignée de manœuvre, et ladite plaque étant mobile en rotation solidairement audit pivot entre ladite position de verrouillage et ladite position de déverrouillage par respectivement verrouillage ou déverrouillage desdits plots dans la plaque.

Selon un mode particulier de réalisation de l'invention, chacun desdits plots comporte une tige surmontée d'une tête, et chaque secteur de ladite plaque comporte un orifice traversant adapté à laisser passer une tête de plot en position déverrouillée, ledit orifice s'ouvrant en l'un de ses côtés suivant le sens de rotation de la plaque, sur un plateau de verrouillage, sur lequel une tête de plot vient reposer en position de verrouillage , ledit plateau comprenant une rainure traversante ayant une extrémité ouverte communiquant avec ledit orifice et une extrémité fermée. Ladite rainure est adaptée à laisser passer seulement la tige de plot et bordée latéralement partiellement d'une rampe de guidage en plan incliné montant de l'extrémité ouverte de la rainure vers l'extrémité fermée, de sorte que chaque plot est saisi sous sa tête et guidé de l'orifice occupé par la tête de plot vers l'extrémité fermée de la rainure contre laquelle la tête de plot vient en butée en position de verrouillage.

En particulier lesdits plots ont une tête de forme circulaire et une tige cylindrique de diamètre strictement inférieur au diamètre de la tête, et ledit orifice traversant d'un secteur de la plaque a un diamètre strictement supérieur à celui de la tête, la rainure traversante dudit plateau ayant une largeur strictement supérieure au diamètre de la tige et strictement inférieure au diamètre de la tête.

De manière préférée, ladite extrémité de barre comprend un logement dans lequel sont logés ladite plaque et ledit pivot.

De préférence aussi, ladite poignée de manœuvre est disposée dans un plan au-dessus de la barre de toit et de sorte que la partie de poignée réceptrice d'une extrémité dudit pivot se situe au-dessus dudit logement et ferme la partie supérieure dudit logement.

Avantageusement, ledit dispositif comprend un joint de compression disposé entre ladite platine du support et ladite plaque, ou entre ladite platine du support et la partie dudit logement proximale et au-dessus de ladite platine. Avantageusement ledit joint de compression a aussi une fonction d'étanchéité.

De préférence ladite platine du support comprend quatre plots de verrouillage, et ladite plaque comprend quatre secteurs de verrouillage correspondants identiques. En particulier, ladite plaque est apte à pivoter réversiblement suivant un angle de rotation d'une amplitude de 45 degrés entre la position verrouillée et la position déverrouillée de la barre.

Ledit dispositif de barre de toit comprend un moyen de fixation pour chaque extrémité de barre, soit deux moyens de fixation en tout.

Selon un mode préféré de réalisation de l'invention, ledit dispositif de barre de toit peut comprendre en outre un moyen anti-vol contre le vol de la barre de toit, et/ou de tout le dispositif, ledit moyen anti-vol comportant un système de verrouillage qui prévient la rotation du pivot, et/ou de la poignée. Par exemple un système de verrouillage est un système à clé empêchant la rotation du pivot

L'invention a également pour objet un porte-bagage de toit pour véhicule automobile comprenant au moins deux dispositifs de barre de toit identiques et tels que celui décrit précédemment.

L'invention a également pour objet un procédé pour passer d'une d'installation latérale à une installation transversale d'un porte-bagage de toit sur un toit d'un véhicule automobile, dans lequel on utilise un porte-bagage de toit comprenant deux dispositifs de barre de toit identiques et tels que celui décrit précédemment. Selon ce procédé, on démonte les barres qui étaient fixées en position latérale sur leurs supports respectifs fixés latéralement sur le toit, après avoir déverrouillé les moyens de fixation de chaque barre, puis on installe transversalement une barre par fixation de l'une de ses extrémités à l'un des supports qu'elle occupait , dans une position tournée de 90 degrés par rapport à cette position antérieure, et par fixation de son autre extrémité au support sur le côté opposé et qui était occupé par une extrémité de l'autre barre. On répète ces étapes pour l'autre barre. On verrouille les moyens de fixation de chaque extrémité de chaque barre.

L'invention a également pour objet un procédé pour passer d'une installation transversale à une installation latérale d'un porte-bagage de toit sur un toit d'un véhicule automobile, dans lequel on utilise un porte-bagage de toit comprenant deux dispositifs de barre de toit identiques et tels que celui décrit précédemment. Selon ce procédé, on démonte les barres qui étaient fixées en position transversale sur des supports fixés en opposition de chaque côté du toit, après avoir déverrouillé les moyens de fixation de chaque barre, puis on installe longitudinalement une barre par fixation de l'une de ses extrémités à l'un des supports qu'elle occupait, dans une position tournée de 90 degrés par rapport à cette position antérieure, et par fixation de son autre extrémité au support situé sur le même côté de toit et qui était occupé par une extrémité de l'autre barre, on répète ces étapes pour l'autre barre, on verrouille les moyens de fixation de chaque extrémité de chaque barre par action depuis la poignée de manœuvre que comprend chaque dispositif.

L'invention a également pour objet un véhicule automobile comprenant un porte-bagage de toit comportant au moins deux dispositifs de barre de toit tels que décrit précédemment.

D'autres particularités et avantages de l'invention ressortiront à la lecture de la description faite ci-après de plusieurs modes de réalisation particuliers de l'invention, donnés à titre indicatif mais non limitatifs, en référence aux dessins annexés sur lesquels :
[Fig. 1] illustre suivant une vue de dessus, un dispositif de barre de toit comportant une barre de toit (représentée partiellement) et un moyen de fixation de la barre de toit en une extrémité de la barre en position verrouillée, en coupe partielle longitudinale dans le plan de la poignée du dispositif, selon un mode de réalisation de l'invention.
[Fig. 2] illustre suivant une vue de dessus, un dispositif de barre de toit selon le mode de réalisation de l'invention représenté en Fig.1, en coupe partielle longitudinale dans le plan de la poignée du dispositif, ledit moyen de fixation étant en position déverrouillée.

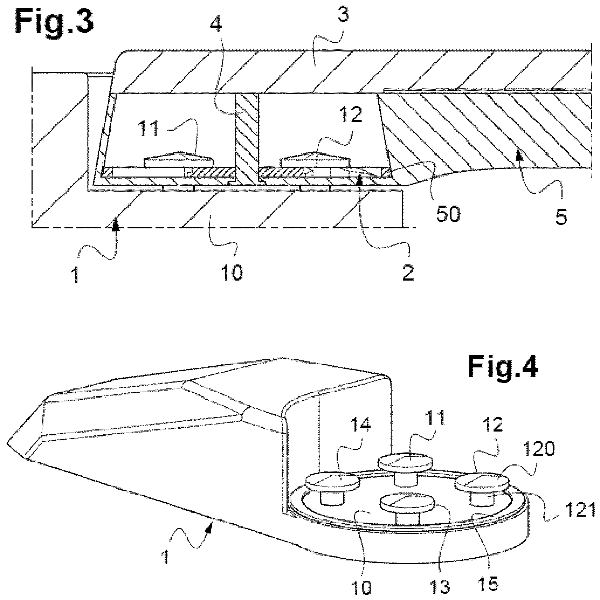

[Fig. 3] illustre suivant une vue en coupe longitudinale dans le plan vertical, un dispositif de barre de toit en position verrouillée, selon le mode de réalisation de l'invention représenté aux figures précédentes.
[Fig. 4] représente, suivant une vue en perspective et de dessus, le support de fixation que comprend le dispositif de barre de toit représenté aux figures précédentes.
[Fig. 5] représente, suivant une vue en perspective et de dessus, une plaque de verrouillage, munie d'un axe pivot, que comprend le moyen de fixation de la barre de toit représenté aux figures précédentes.
[Fig. 6] représente suivant une vue en perspective et de dessus, une paire de dispositifs de barre de toit dont les barres sont en position latérale (direction longitudinale) sur un toit de véhicule (non représenté).
[Fig. 7] représente suivant une vue en perspective et de dessus, la même paire de dispositifs de barre de toit qu'en Fig.6 mais les barres sont en position transversale sur un toit de véhicule (non représenté).

Les orientations exprimées dans la description des figures sont données en référence à un repère orthonormé classique XYZ du véhicule dans lequel X représente la direction longitudinale avant-arrière du véhicule, orientée vers l'arrière, Y la direction transversale du véhicule, orientée vers la droite, et Z la direction verticale orientée vers le haut du véhicule, les roues de ce dernier reposant sur le sol.

Des références identiques pourront être utilisées d'une figure à l'autre pour désigner des éléments identiques ou similaires.

Sauf précisions contraires, dans la présente description, les termes avant, arrière, supérieur, inférieur, font ainsi référence aux directions du véhicule, lorsque le dispositif de barre de toit selon l'invention est monté sur le véhicule.

Des références identiques pourront être utilisées d'une figure à l'autre pour désigner des éléments identiques ou similaires.

Le dispositif de barre de toit représenté sur les différentes figures selon un mode de réalisation de l'invention comporte un moyen de fixation d'une barre de toit qui comprend en chaque extrémité d'une barre de toit 5, un support de fixation 1 comportant une platine 10 pourvue de plots de verrouillage 11, 12, 13, 14 érigés selon l'axe vertical Z. Lesdits plots ont une tête 120 de forme circulaire et une tige cylindrique 121 de diamètre strictement inférieur au diamètre de la tête.

Ledit moyen de fixation comprend aussi une poignée de manœuvre 3 et un pivot 4 solidarisé en son extrémité supérieure à la poignée, ledit pivot étant d'axe de rotation de direction verticale lorsque le dispositif est installé sur le toit d'un véhicule. Chaque extrémité de la barre comprend une partie évidée 50 dans laquelle sont logés ledit pivot 4 et une plaque de verrouillage 2 en forme de disque, donc de forme circulaire, divisée en quatre secteurs de verrouillage identiques 21, 22, 23, 24, un secteur par plot. Chaque secteur occupe un quart de la plaque.

Ledit pivot 4 passe à travers la plaque 2, perpendiculairement au plan de la plaque et par le centre de ladite plaque. Il est retenu en son extrémité inférieure sous la plaque 2. La poignée se situe au-dessus de la barre de toit, et comprend une partie maintenant la plaque et le pivot qui coiffe le logement (partie évidée) 50 dans la barre.

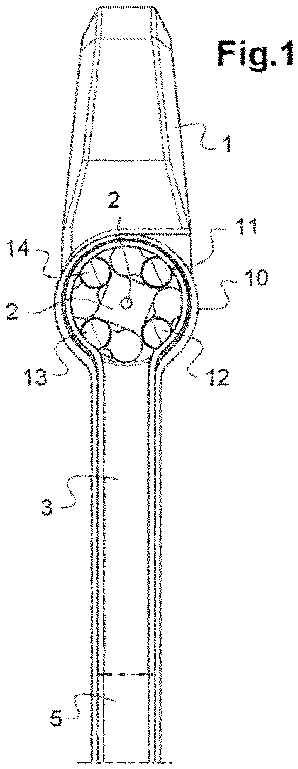

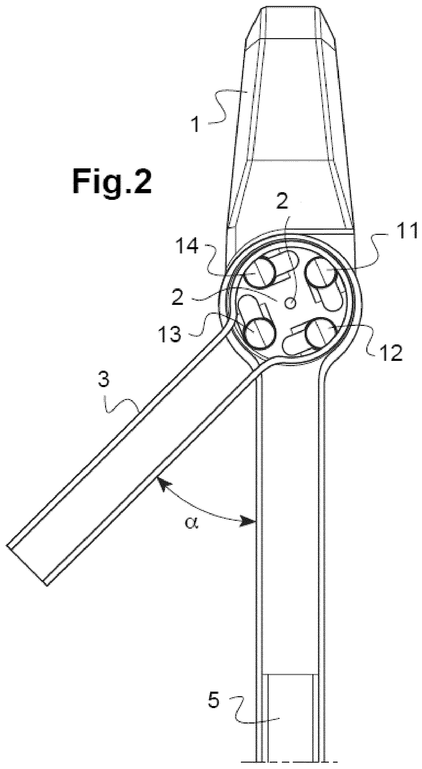

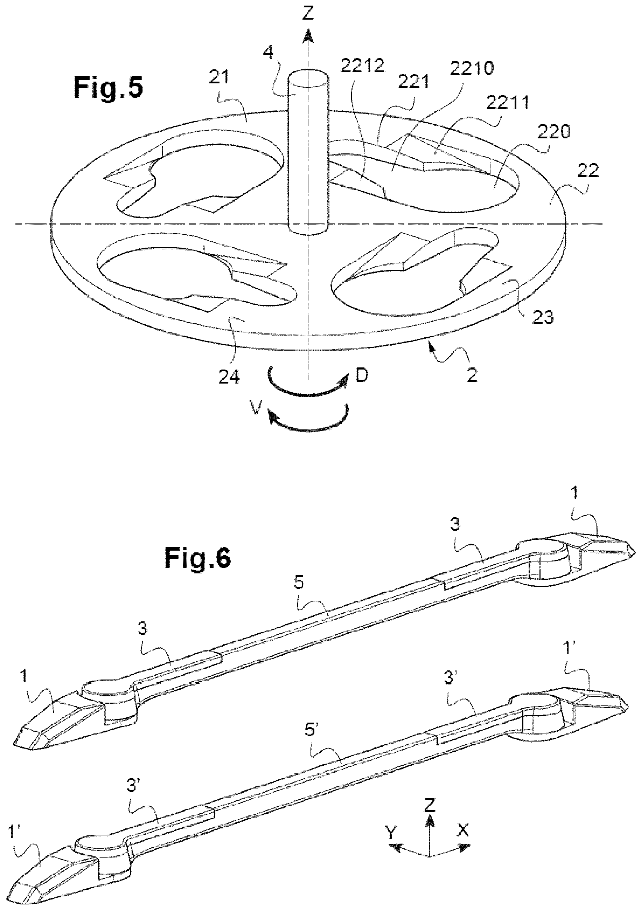

Chaque secteur de ladite plaque est tel que va être décrit le secteur 22 représenté sur la figure 5. Le secteur 22 comporte un orifice traversant 220 d'un diamètre strictement supérieur à celui de la tête du plot 12 venant en correspondance, de manière à laisser passer la tête de plot en position déverrouillée (Fig. 2 et Fig. 5). Comme illustré notamment en Fig.5, ledit orifice 220 s'ouvre, suivant le sens de rotation de la plaque en verrouillage (flèche V), sur un plateau de verrouillage 221. Ledit plateau comprend une rainure traversante 2210 communiquant par son extrémité ouverte en prolongement avec ledit orifice 220. Ladite rainure a une largeur strictement supérieure au diamètre de la tige du plot et strictement inférieure au diamètre de la tête de plot de manière à laisser passer seulement la tige de plot. Ladite rainure 2210 est bordée, en chacun de ses côtés, sur une partie de sa longueur à partir de l'orifice 220, d'une rampe de guidage 2211, 2212 en plan incliné montant de l'extrémité ouverte de la rainure proximale à l'orifice 220 vers l'extrémité fermée de la partie opposée de la rainure 2210 de sorte que, lors du verrouillage de la barre de toit, la plaque 2 étant entraînée en rotation autour du pivot 4 sous l'action de la poignée, le plot de verrouillage 12 dont la tête 120 est présente dans l'orifice 220, est saisi au niveau de sa tige 221, juste en dessous de sa tête, par le plateau de verrouillage, soulevé par les rampes 2211, 2212 et conduit selon la rainure 2210, de l'extrémité ouverte de la rainure jusqu'en butée contre l'extrémité fermée de la rainure afin d'immobiliser la barre 5 comme illustré en Fig. 1. En position de verrouillage, la poignée 3 se superpose à la barre 5.

Ledit dispositif comprend en outre un joint de compression et d'étanchéité 15 reposant sur la platine 10 du support 1, et au montage du dispositif il est entre ladite platine et la paroi de la barre sur laquelle repose la plaque de verrouillage 2. Ce joint est de forme circulaire et entoure l'ensemble des plots de verrouillage, son diamètre étant tel qu'il soit en correspondance avec la partie périphérique de la plaque de verrouillage 2. C'est un joint en caoutchouc qui est comprimé par l'action de la plaque 2 sur les plots de verrouillage, réduisant ainsi tout mouvement de la barre de toit en position verrouillée. Il sert également de joint d'étanchéité à la poussière et à l'eau.

Lorsqu'on veut enlever la barre 5, le déverrouillage s'effectue quand un opérateur actionne la poignée 3 en la faisant pivoter autour du pivot 4 d'axe de rotation Z d'un angle α de 45 degrés (Fig. 2 et flèche D sur Fig. 5) pour ainsi faire pivoter la plaque 2 dans le sens opposé à celui de verrouillage. Cette action permet aux plots de verrouillage 11, 12, 13, 14 d'être libérés et de revenir dans leur orifice (orifice 220 pour le plot 12) respectif des secteurs 21, 22, 23, 24 correspondants de la plaque 2.

On peut ainsi installer une paire de barres toit en position latérale, autrement dit selon la direction longitudinale X, sur le toit d'un véhicule automobile, en installant deux dispositifs de barre de toit tels que celui décrit précédemment. En référence à la figure 6, les supports 1 et 1' respectifs des dispositifs sont installés selon la direction longitudinale du véhicule, les supports d'un même dispositif se faisant face et installés éloignés l'un de l'autre à la distance requise pour installer la barre correspondante 5, 5' entre eux. Chaque barre est installée en plaçant les orifices de la plaque de verrouillage 2 solidaire de la poignée 3, 3' au-dessus des plots de verrouillage correspondants, la poignée étant alors disposée à 45° par rapport à la barre. Puis en amenant par rotation la poignée juste au-dessus de la barre, on verrouille la barre comme expliqué plus haut. Ces actions sont répétées en chaque extrémité respective des barres.

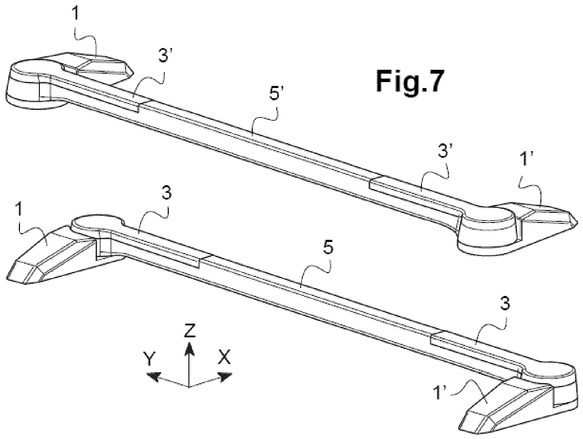

Pour passer les barres qui sont en position latérale à une position transversale, selon la direction transversale Y du véhicule, en référence à la figure 7, les supports 1 et 1' respectifs des dispositifs restent en place, il suffit de déverrouiller les barres 5, 5' comme expliqué plus haut par action sur la poignée. Le déplacement en rotation de la poignée à 45 degrés par rapport à la barre déverrouille la barre comme expliqué plus haut, en chaque extrémité de barre, et on enlève la barre. On répète cette opération pour l'autre barre.

On positionne alors l'une 5 des barres à 90 degrés sur l'un de ses supports 1 par rapport à sa position initiale en latérale, les orifices de la plaque de verrouillage de sa poignée 3 pouvant venir en correspondance avec les plots de verrouillage dudit support 1. On fixe l'autre extrémité de la barre à 90 degrés sur le support 1' de l'autre côté du véhicule qui était utilisé pour l'autre barre 5' en latéral, en procédant comme précédemment, de sorte que les plots du support 1' soient en correspondance avec les orifices de la plaque de verrouillage en cette extrémité de barre. Le verrouillage de la fixation des extrémités de la barre 5 se fait comme décrit plus haut, en tournant chaque poignée 3 de 45 degrés pour la ramener juste au-dessus de la barre 5, les plots se verrouillant à la plaque de verrouillage.

On procède similairement pour l'autre barre 5' en la démontant et en la fixant en ses extrémités à 90 degrés sur l'un des supports 1 et l'un des supports 1' et on verrouille comme décrit plus haut.

Le dispositif de barre de toit selon l'invention permet d'assurer un mode de fixation longitudinale ainsi qu'un mode de fixation transversale de barres de toit d'un porte-bagage de toit, facilement et sans avoir à utiliser d'outil pour passer d'un mode de fixation à l'autre des barres, une fois les supports des dispositifs installés sur le toit. Par ailleurs, le dispositif de barre de toit peut être équipé en outre d'un système anti-vol non représenté, chaque moyen de fixation comprenant un mécanisme de verrouillage anti-rotation du pivot et/ou de la poignée de manœuvre 3. Le mécanisme peut par exemple être un mécanisme de fermeture à clé. Un simple mécanisme dit « pousser la clé pour déverrouiller » peut faire rétracter le piston de verrouillage du mécanisme pour permettre le déverrouillage de la poignée.

## Revendications

1. Dispositif de barre de toit comprenant une barre de toit démontable et un moyen de fixation verrouillable/déverrouillable de la barre en chaque extrémité de la barre, ledit moyen de fixation comprenant :
- un support de fixation (1, 1') comportant une platine (10) munie de plots de verrouillage (11, 12, 13, 14),
- une plaque de verrouillage (2) montée en correspondance avec ladite platine (10), divisée en autant de secteurs de verrouillage (21, 22, 23, 24) que de plots de verrouillage, chaque secteur étant récepteur d'un plot apte à y occuper une position de verrouillage et une position de déverrouillage,
- une poignée de manœuvre (3, 3'),
- un pivot (4) d'axe de rotation orienté dans un plan perpendiculaire au plan principal de ladite plaque (2), solidarisé à la poignée de manœuvre, et ladite plaque étant mobile en rotation solidairement audit pivot (4) entre ladite position de verrouillage et ladite position de déverrouillage par respectivement verrouillage ou déverrouillage desdits plots dans la plaque.

2. Dispositif de barre de toit selon la revendication 1, **caractérisé en ce que** chacun desdits plots (11, 12, 13, 14) comporte une tige (121) surmontée d'une tête (120), et chaque secteur de verrouillage (21, 22, 23, 24) de ladite plaque (2) comporte un orifice traversant (220) adapté à laisser passer une tête de plot (121) en position de déverrouillage, ledit orifice (220) s'ouvrant en l'un de ses côtés suivant le sens de rotation de la plaque, sur un plateau de verrouillage (221), sur lequel une tête de plot (12) vient reposer en position de verrouillage, ledit plateau (221) comprenant une rainure traversante (2210) ayant une extrémité ouverte communiquant avec ledit orifice (220) et une extrémité fermée, ladite rainure étant adaptée à laisser passer seulement la tige de plot (121) et bordée latéralement partiellement d'une rampe de guidage (2211, 2212) en plan incliné montant de l'extrémité ouverte de la rainure vers l'extrémité fermée.

3. Dispositif de barre de toit selon la revendication 2, **caractérisé en ce que** lesdits plots ont une tête (120) de forme circulaire et une tige (121) de forme cylindrique de diamètre strictement inférieur au diamètre de la tête, et ledit orifice traversant (220) d'un secteur de verrouillage (21, 22, 23, 24) de la plaque de verrouillage (2) a un diamètre strictement supérieur à celui de la tête de plot (120), la rainure traversante (2210) dudit plateau de verrouillage (221) ayant une largeur strictement supérieure au diamètre de la tige de plot (121) et strictement inférieure au diamètre de la tête de plot (120).

4. Dispositif de barre de toit selon l'une quelconque des revendications 1 à 3, **caractérisé en ce que** ladite extrémité de barre comprend un logement (50) dans lequel sont logés ladite plaque de verrouillage (2) et ledit pivot (4).

5. Dispositif de barre de toit selon la revendication 4, **caractérisé en ce que** ladite poignée de manœuvre (3, 3') est disposée dans un plan au-dessus de la barre de toit (5, 5') et de sorte que la partie de poignée réceptrice d'une extrémité dudit pivot (4) se situe au-dessus dudit logement (50) et ferme la partie supérieure dudit logement (50).

6. Dispositif de barre de toit selon l'une quelconque des revendications 1 à 5, **caractérisé en ce qu'**il comprend un joint de compression (15) disposé entre ladite platine (10) du support et ladite plaque de verrouillage (2), ou entre ladite platine (10) du support et la partie dudit logement selon la revendication 4 ou 5, proximale et au-dessus de ladite platine.

7. Dispositif de barre de toit selon l'une quelconque des revendications 1 à 6, **caractérisé en ce que** ladite platine (10) du support (1, 1') comprend quatre plots de verrouillage (11, 12, 13, 14), et ladite plaque de verrouillage (2) comprend quatre secteurs de verrouillage (21, 22, 23, 24) correspondants identiques, ladite plaque (2) étant apte à pivoter réversiblement suivant un angle de rotation (α) d'une amplitude de 45 degrés entre ladite position de verrouillage et ladite position de déverrouillage de la fixation de la barre.

8. Porte-bagage de toit pour véhicule automobile, **caractérisé en ce qu'**il comprend au moins deux dispositifs de barre de toit identiques et selon l'une quelconque des revendications 1 à 7.

9. Procédé pour passer d'une installation latérale à une installation transversale d'un porte-bagage de toit sur un toit d'un véhicule automobile, **caractérisé en ce qu'**on utilise un porte-bagage de toit comprenant deux dispositifs de barre de toit identiques selon l'une quelconque des revendications 1 à 7, procédé dans lequel :
- on démonte les barres (5, 5') qui étaient fixées en position latérale sur leurs supports (1, 1') respectifs fixés latéralement sur le toit, après avoir déverrouillé les moyens de fixation de chaque barre, puis
- on installe transversalement une barre (5) par fixation de l'une de ses extrémités à l'un des supports (1) qu'elle occupait , dans une position tournée de 90 degrés par rapport à cette position antérieure, et par fixation de son autre extrémité au support (1') sur le côté de toit opposé et qui était occupé par une extrémité de l'autre barre (5'),
- on répète ces étapes pour l'autre barre (5'),
- on verrouille les moyens de fixation de chaque extrémité de chaque barre (5, 5') par action depuis la poignée de manœuvre (3, 3') que comprend chaque dispositif.

10. Procédé pour passer d'une installation transversale à une installation latérale d'un porte-bagage de toit sur un toit d'un véhicule automobile, **caractérisé en ce qu'**on utilise un porte-bagage de toit comprenant deux dispositifs de barre de toit identiques selon l'une quelconque des revendications 1 à 7, procédé dans lequel :
- on démonte les barres (5, 5') qui étaient fixées en position transversale sur des supports (1, 1') fixés en opposition de chaque côté du toit, après avoir déverrouillé les moyens de fixation de chaque barre, puis
- on installe longitudinalement une barre (5) par fixation de l'une de ses extrémités à l'un des supports (1) qu'elle occupait , dans une position tournée de 90 degrés par rapport à cette position antérieure, et par fixation de son autre extrémité au support (1) situé sur le même côté de toit et qui était occupé par une extrémité de l'autre barre (5'),
- on répète ces étapes pour l'autre barre (5'),
- on verrouille les moyens de fixation de chaque extrémité de chaque barre (5, 5') par action depuis la poignée de manœuvre (3, 3') que comprend chaque dispositif.

## Patentansprüche

1. Dachrelingvorrichtung, umfassend eine demontierbare Dachreling und ein verriegelbares/entriegelbares Befestigungsmittel für die Reling an jedem Ende der Reling, das Befestigungsmittel umfassend:
- einen Befestigungsträger (1, 1'), der eine Platte (10) aufweist, die mit Verriegelungsstiften (11, 12, 13, 14) versehen ist,
- eine Verriegelungsscheibe (2), die in Übereinstimmung mit der Platte (10) montiert ist und in ebenso viele Verriegelungssektoren (21, 22, 23, 24) wie Verriegelungsstifte geteilt ist, wobei jeder Sektor einen Stift aufnimmt, der geeignet ist, darin eine Verriegelungsstellung und eine Entriegelungsstellung einzunehmen,
- einen Betätigungsgriff (3, 3'),
- einen Zapfen (4) mit einer Drehachse, die in einer Ebene senkrecht zur Hauptebene der Scheibe (2) ausgerichtet ist, der mit dem Betätigungsgriff verbunden ist, und wobei die Scheibe mit dem Zapfen (4) drehfest verbunden ist zwischen der Verriegelungsstellung und der Entriegelungsstellung durch Verriegeln beziehungsweise Entriegeln der Stifte in der Scheibe.

2. Dachrelingvorrichtung nach Anspruch 1, **dadurch gekennzeichnet, dass** jeder der Stifte (11, 12, 13, 14) einen Schaft (121) aufweist, auf dem ein Kopf (120) sitzt, und jeder Verriegelungssektor (21, 22, 23, 24) der Scheibe (2) eine durchgehende Öffnung (220) aufweist, die dazu angepasst ist, einen Stiftkopf (121) in der Entriegelungsstellung durchzulassen, wobei sich die Öffnung (220) an einer ihrer Seiten gemäß der Drehrichtung der Scheibe öffnet, auf einer Verriegelungsscheibe (221), auf der ein Stiftkopf (12) in der Verriegelungsstellung aufliegt, wobei die Scheibe (221) eine durchgehende Kehle (2210) umfasst, die ein offenes Ende, das mit der Öffnung (220) in Verbindung steht, und ein geschlossenes Ende hat, wobei die Kehle dazu angepasst ist, nur den Stiftschaft (121) durchzulassen, und seitlich teilweise von einer Führungsrampe (2211, 2212) mit von dem offenen Ende der Kehle zu dem geschlossenen Ende hin aufsteigender schräger Ebene gesäumt wird.

3. Dachrelingvorrichtung nach Anspruch 2, **dadurch gekennzeichnet, dass** die Stifte einen runden Kopf (120) und einen zylindrischen Schaft (121), dessen Durchmesser strikt kleiner als der Durchmesser des Kopfes ist, haben, und die durchgehende Öffnung (220) eines Verriegelungssektors (21, 22, 23, 24) der Verriegelungsscheibe (2) einen Durchmesser hat, der strikt größer als der des Stiftkopfes (120) ist, wobei die durchgehende Kehle (2210) der Verriegelungsscheibe (221) eine Breite hat, die strikt größer als der Durchmesser des Stiftschafts (121) und strikt kleiner als der Durchmesser des Stiftkopfes (120) ist.

4. Dachrelingvorrichtung nach einem der Ansprüche 1 bis 3, **dadurch gekennzeichnet, dass** das Relingende eine Aufnahme (50) umfasst, in der die Verriegelungsscheibe (2) und der Zapfen (4) aufgenommen sind.

5. Dachrelingvorrichtung nach Anspruch 4, **dadurch gekennzeichnet, dass** der Betätigungsgriff (3, 3') in einer Ebene über der Dachreling (5, 5') angeordnet ist und so, dass der ein Ende des Zapfens (4) aufnehmende Griffteil über der Aufnahme (50) liegt und den oberen Teil der Aufnahme (50) verschließt.

6. Dachrelingvorrichtung nach einem der Ansprüche 1 bis 5, **dadurch gekennzeichnet, dass** sie eine Kompressionsdichtung (15) umfasst, die zwischen der Platte (10) des Trägers und der Verriegelungsscheibe (2) angeordnet ist oder zwischen der Platte (10) des Trägers und dem Teil der Aufnahme nach Anspruch 4 oder 5, proximal und über der Platte.

7. Dachrelingvorrichtung nach einem der Ansprüche 1 bis 6, **dadurch gekennzeichnet, dass** die Platte (10) des Trägers (1, 1') vier Verriegelungsstifte (11, 12, 13, 14) umfasst und die Verriegelungsscheibe (2) vier identische entsprechende Verriegelungssektoren (21, 22, 23, 24) umfasst, wobei die Scheibe (2) geeignet ist, reversibel gemäß einem Drehwinkel (α) mit einer Amplitude von 45 Grad zwischen der Verriegelungsstellung und der Entriegelungsstellung der Befestigung der Reling zu schwenken.

8. Dachgepäckträger für ein Kraftfahrzeug, **dadurch gekennzeichnet, dass** er mindestens zwei identische Dachrelingvorrichtungen nach einem der Ansprüche 1 bis 7 umfasst.

9. Verfahren zum Wechseln von einer seitlichen Anbringung zu einer quer verlaufenden Anbringung eines Dachgepäckträgers auf einem Dach eines Kraftfahrzeugs, **dadurch gekennzeichnet, dass** ein Dachgepäckträger verwendet wird, der zwei identische Dachrelingvorrichtungen nach einem der Ansprüche 1 bis 7 umfasst, Verfahren, bei dem:
- die Relinge (5, 5'), die in seitlicher Stellung auf ihren jeweiligen seitlich auf dem Dach befestigten Trägern (1, 1') befestigt waren, demontiert werden, nachdem die Befestigungsmittel jeder Reling entriegelt wurden, dann
- eine Reling (5) durch Befestigen eines ihrer Enden an einem der Träger (1), den sie einnahm, in einer in Bezug auf diese vorherige Stellung um 90 Grad gedrehten Stellung und durch Befestigen ihres anderen Endes an dem Träger (1') auf der entgegengesetzten Dachseite, der von einem Ende der anderen Reling (5') eingenommen wurde, quer angebracht wird,
- diese Schritte für die andere Reling (5') wiederholt werden,
- die Befestigungsmittel jedes Endes jeder Reling (5, 5') durch Einwirken von dem Betätigungsgriff (3, 3') aus, den jede Vorrichtung umfasst, verriegelt werden.

10. Verfahren zum Wechseln von einer quer verlaufenden Anbringung zu einer seitlichen Anbringung eines Dachgepäckträgers auf einem Dach eines Kraftfahrzeugs, **dadurch gekennzeichnet, dass** ein Dachgepäckträger verwendet wird, der zwei identische Dachrelingvorrichtungen nach einem der Ansprüche 1 bis 7 umfasst, Verfahren, bei dem:
- die Relinge (5, 5'), die in quer verlaufender Stellung auf ihren jeweiligen entgegengesetzt an jeder Seite des Dachs befestigten Trägern (1, 1') befestigt waren, demontiert werden, nachdem die Befestigungsmittel jeder Reling entriegelt wurden, dann
- eine Reling (5) durch Befestigen eines ihrer Enden an einem der Träger (1), den sie einnahm, in einer in Bezug auf diese vorherige Stellung um 90 Grad gedrehten Stellung und durch Befestigen ihres anderen Endes an dem Träger (1), der auf der derselben Dachseite gelegen ist und der von einem Ende der anderen Reling (5') eingenommen wurde, seitlich angebracht wird,
- diese Schritte für die andere Reling (5') wiederholt werden,
- die Befestigungsmittel jedes Endes jeder Reling (5, 5') durch Einwirken von dem Betätigungsgriff (3, 3') aus, den jede Vorrichtung umfasst, verriegelt werden.

## Claims

1. Roof bar device comprising a removable roof bar and a lockable/unlockable means for fixing the bar at each end of the bar, said fixing means comprising:
- a fixing support (1, 1') comprising a mounting plate (10) provided with locking studs (11, 12, 13, 14),
- a locking plate (2) mounted in correspondence with said mounting plate (10) and divided into as many locking sectors (21, 22, 23, 24) as there are locking studs, each sector receiving a stud capable of occupying a locking position and an unlocking position therein,
- an operating handle (3, 3'),
- a pivot (4) with an axis of rotation oriented in a plane perpendicular to the main plane of said plate (2), said pivot being secured to the operating handle, and said plate being able to rotate as one with said pivot (4) between said locking position and said unlocking position by respectively locking or unlocking said studs in the plate.

2. Roof bar device according to Claim 1, **characterized in that** each of said studs (11, 12, 13, 14) comprises a stem (121) surmounted by a head (120), and each locking sector (21, 22, 23, 24) of said plate (2) comprises a through-orifice (220) designed to allow a stud head (121) to pass through in the unlocking position, said orifice (220) opening, at one of its sides in the direction of rotation of the plate, onto a locking plateau (221), on which a stud head (12) rests in the locking position, said plateau (221) comprising a through-groove (2210) having an open end in communication with said orifice (220) and a closed end, said groove being designed to allow only the stud stem (121) to pass through and partially bordered laterally by a guide ramp (2211, 2212) in an inclined plane rising from the open end of the groove towards the closed end.

3. Roof bar device according to Claim 2, **characterized in that** said studs have a circular head (120) and a cylindrical stem (121) with a diameter that is strictly smaller than the diameter of the head, and said through-orifice (220) of a locking sector (21, 22, 23, 24) of the locking plate (2) has a diameter that is strictly larger than that of the stud head (120), the through-groove (2210) of said locking plateau (221) having a width that is strictly larger than the diameter of the stud stem (121) and strictly smaller than the diameter of the stud head (120).

4. Roof bar device according to any one of Claims 1 to 3, **characterized in that** said bar end comprises a housing (50) in which said locking plate (2) and said pivot (4) are housed.

5. Roof bar device according to Claim 4, **characterized in that** said operating handle (3, 3') is arranged in a plane above the roof bar (5, 5') and so that the handle portion receiving one end of said pivot (4) is located above said housing (50) and closes the upper portion of said housing (50).

6. Roof bar device according to any one of Claims 1 to 5, **characterized in that** it comprises a compression seal (15) arranged between said mounting plate (10) of the support and said locking plate (2), or between said mounting plate (10) of the support and the portion of said housing according to Claim 4 or 5 that is proximal to and above said mounting plate.

7. Roof bar device according to any one of Claims 1 to 6, **characterized in that** said mounting plate (10) of the support (1, 1') comprises four locking studs (11, 12, 13, 14), and said locking plate (2) comprises four identical corresponding locking sectors (21, 22, 23, 24), said plate (2) being able to pivot reversibly through an angle of rotation (α) of an amplitude of 45 degrees between said locking position and said position for unlocking the fixing of the bar.

8. Roof rack for a motor vehicle, **characterized in that** it comprises at least two identical roof bar devices according to any one of Claims 1 to 7.

9. Method for switching a roof rack on a roof of a motor vehicle from a lateral installation to a transverse installation, **characterized in that** a roof rack comprising two identical roof bar devices according to any one of Claims 1 to 7 is used, in which method:
- the bars (5, 5') that were fixed in lateral position on their respective supports (1, 1') fixed laterally on the roof are removed, after having unlocked the means for fixing each bar, then
- a bar (5) is installed transversely by fixing one of its ends to one of the supports (1) that it occupied, in a position rotated by 90 degrees with respect to this previous position, and by fixing its other end to the support (1') on the opposite side of the roof and that was occupied by one end of the other bar (5'),
- these steps are repeated for the other bar (5'),
- the means for fixing each end of each bar (5, 5') are locked by an action from the operating handle (3, 3') that each device comprises.

10. Method for switching a roof rack on a roof of a motor vehicle from a transverse installation to a lateral installation, **characterized in that** a roof rack comprising two identical roof bar devices according to any one of Claims 1 to 7 is used, in which method:
- the bars (5, 5') that were fixed in transverse position on supports (1, 1') fixed opposite each side of the roof are removed, after having unlocked the means for fixing each bar, then
- a bar (5) is installed longitudinally by fixing one of its ends to one of the supports (1) that it occupied, in a position rotated by 90 degrees with respect to this previous position, and by fixing its other end to the support (1) situated on the same side of the roof and that was occupied by one end of the other bar (5'),
- these steps are repeated for the other bar (5'),
- the means for fixing each end of each bar (5, 5') are locked by an action from the operating handle (3, 3') that each device comprises.
